# EUROPÄISCHE PATENTSCHRIFT

(11) **EP 0 949 421 B1**
(45) Veröffentlichungstag und Bekanntmachung des Hinweises auf die Patenterteilung: **04.08.2004**
(21) Anmeldenummer: 99106077.3
(22) Anmeldetag: 26.03.1999
(51) Int. Cl.: F15B 15/08, B60G 21/055

(54) **Hydraulisch betätigter Drehsteller**
Fluid operated rotary actuator
Actionneur rotatif à commande hydraulique

(30) Priorität: 06.04.1998 DE 19815314
(43) Veröffentlichungstag der Anmeldung: 13.10.1999
(73) Patentinhaber: DaimlerChrysler AG, 70567 Stuttgart (DE)
(72) Erfinder: Busch, Werner, 71384 Weinstadt (DE); Rösener, Jörg, Dr., 70327 Stuttgart (DE); Speier, Wolfgang, 70619 Stuttgart (DE); Szell, Thomas, 71334 Waiblingen (DE)

(56) Entgegenhaltungen:
- EP-A- 0 190 400
- EP-A- 0 428 439
- EP-A- 0 697 526
- EP-A- 0 825 350
- DE-A- 3 909 910
- DE-A- 4 337 813
- DE-B- 1 179 124
- FR-A- 2 455 201
- GB-A- 1 311 645
- US-A- 2 791 128

## Beschreibung

Die Erfindung betrifft einen hydraulisch betätigten Drehsteller, gemäß dem Anspruch 1.

Ein aus der EP 04 28 439 A1 bekannter Drehsteller weist zwei axial aneinander angesetzte und einander teilweise überlappende Gehäusehälften auf, die gemeinsam einen Innenraum begrenzen und die axial nach außen in halsartige Fortsätze übergehen. Diese weisen axiale Aufnahmeöffnungen zur formschlüssigen Verriegelung mit gegeneinander verdrehbaren Elementen in Form von Stegteilen eines Drehstabilisators auf, die achsgleich zueinander liegend über den Drehsteller verbunden sind. Bei für Fahrstabilisatoren üblicher, U-förmiger Grundform des Drehstabilisators tragen dessen Stegteile an ihren voneinander abgelegenen Enden in Fahrzeuglängsrichtung verlaufende Stabilisatorarme, welche auf die über den Fahrstabilisator miteinander verbundenen Räder einer Achse eines Fahrzeuges oder deren Führungsglieder wirken.

Von den beiden in Verlängerung zueinander vorgesehenen und einander teilweise überlappenden Gehäusehälften des Drehstellers weist die eine Gehäusehälfte einen konzentrisch zur gemeinsamen Achse in den Gehäuseinnenraum hineinragenden Ansatz als Innenkörper auf, derart, dass der Mantelteil dieser Gehäusehälfte zusammen mit dem durch deren zentralen Ansatz gebildeten Innenkörper einen Ringraum begrenzt, in dem ein Ringkolben angeordnet ist, der mit einer den Ansatz übergreifenden und gegen die andere Gehäusehälfte sich erstreckenden Buchse versehen ist, die an ihrer vom Ringkolben abgelegenen Seite stirnseitig geschlossen und von dem Mantelteil der anderen Gehäusehälfte als Außenkörper teilweise überdeckt ist. Diese Ausgestaltung hat den Zweck, zwischen dem Ringkolben und der ihm benachbarten Stirnseite des Ringraumes eine erste Arbeitskammer zu schaffen, der gegenüberliegend zwischen der anderen Gehäusehälfte und dem stirnseitigen Abschluss der Hülse eine zweite Arbeitskammer gebildet wird. Einerseits eine Ringquerschnitt aufweisende Arbeitskammer und andererseits eine Kreisquerschnitt aufweisende Arbeitskammer sind also den einander gegenüberliegenden Gehäuseenden zugeordnet vorgesehen und dazwischenliegend sind die zu Drehverstellung erforderlichen Verzahnungen zwischen Innenkörper, Kolben bzw. Buchse und Außenkörper vorgesehen, wobei sich auch der Kolben über einen verzahnten Bereich des Innenkörpers erstreckt, so dass bezogen auf einen gegebenen Außendurchmesser nur ein verhältnismäßig kleiner Ringquerschnitt als Kolbenquerschnitt zur Verfügung steht.

Ein in dieser Art aufgebauter Drehsteller, bei dem die einander axial überlappenden Gehäusehälften über außen liegende Lagerbunde axial und um ihre gemeinsame Achse verdrehbar gegeneinander verspannt sind, ist konstruktiv aufwendig, baut verhältnismäßig lang und bedingt montagemäßig für den Einbau und Ausbau des Drehstellers wegen der axialen Überlappung zu den Stegteilen einen Ausbau des Fahrstabilisators.

Ferner ist aus der EP 0 825 350 A1 ein Drehsteller der eingangs genannten Art bekannt, der einen Außenkörper und einen hierzu koaxialen Innenkörper aufweist und bei dem der Außenkörper den Innenkörper als Ringmantel umschließt. Zwischen Außenkörper und Innenkörper liegt ein Ringraum, der die hydraulisch beaufschlagbare Verstellmechanik aufnimmt und der endseitig über dem Innenkörper zugeordnete Ringbunde abgeschlossen ist. Die Ringbunde sind axial und radial über Schultern des Außenkörpers zugeordnete Lagerungen abgestützt und im axialen Uberdeckungsbereich zum Außenkörper mit Ringdichtungen versehen, die gegen den Außenkörper anliegen und den Ringraum abdichten. Axial außerhalb des abgedichteten Bereiches des Ringraumes liegen die Antriebsanschlüsse des Drehstellers, von denen der eine der axial gegenüber dem Außenkörper leicht vorstehenden Stirnwand eines Ringbundes des Innenkörpers und der andere, axial gegenüberliegende einer Stirnwand des Außenkörpers zugeordnet ist, die die entsprechende Stirnwand des Innenkörpers, bzw. dessen Ringbundes axial leicht übergreift. Der Ringraum ist somit beidseitig über zwischen bewegten Teilen liegende Dichtungen abgedichtet und die Antriebsanschlüsse können in beliebiger Weise gegen den Ringbund des Innenkörpers bzw. den Außenkörper axial verspannt werden.

Der Erfindung liegt die Aufgabe zugrunde, einen Drehsteller der eingangs genannten Art in einfacher, konstruktiv gedrungener Bauform auch bei axial einander gegenüberliegenden Antriebsanschlüssen so auszugestalten, dass sich neben günstigen Montagevoraussetzungen auch günstige Abdichtungsverhältnisse ergeben.

Erreicht wird dies bei dem Drehsteller mit den Merkmalen des Anspruches 1 dadurch, dass der Innenkörper über seine volle Länge vom Außenkörper überdeckt ist und dass der Drehsteller Antriebsanschlüsse aufweist, die als endseitige Flanschdeckel ausgebildet sind, von denen der eine gasdicht gegenüber dem Außenkörper befestigt ist und der andere gasdicht gegenüber dem zugeordneten Ringbund des Innenkörpers, so dass für die Abdichtung des Drehstellers nach außen lediglich eine Dichtgrenze zwischen bewegten Teilen gegeben ist, nämlich zwischen dem Außenkörper und dem Ringbund, an dem der eine Flanschdeckel abdichtend befestigt ist.

Weitere Ausgestaltungen und Merkmale der Erfindung ergeben sich aus den Unteransprüchen. Ferner wird die Erfindung mit weiteren Details anhand der Zeichnungsbeschreibung noch näher erläutert. Es zeigen:
- Fig. 1: einen Schnitt durch einen Drehsteller gemäß der Erfindung entsprechend der Linie I-I in Fig. 2,
- Fig. 2: eine Ansicht des Drehstellers gemäß Fig. 1 in vereinfachter Darstellung, und
- Fig. 3: eine Schnittdarstellung des in Fig. 1 rechtsseitigen Endbereiches des Drehstellers in einer Schnittführung gemäß Linie II-II in Fig. 2.

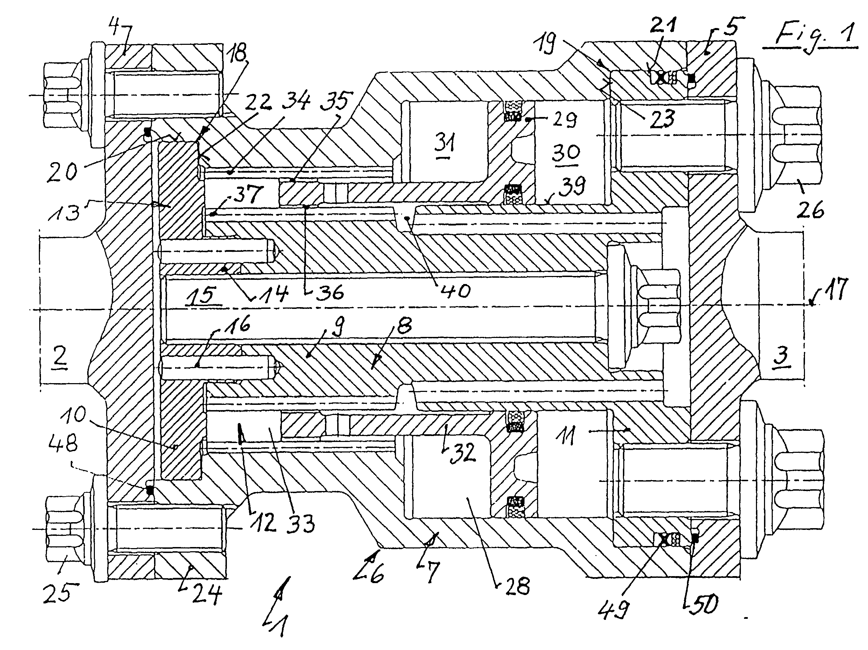

In den Figuren ist lediglich der Drehsteller eines Fahrstabilisators für Kraftfahrzeuge dargestellt, wobei davon ausgegangen ist, dass für diesen eine bekannte Gesamtanordnung gegeben ist, beispielsweise entsprechend der Darstellung in Fig. 1 der EP 0 458 345 A2.

Der insgesamt in den Ausführungsbeispielen mit 1 bezeichnete Drehsteller liegt axial zwischen Stegteilen 2, 3 des Fahrstabilisators, und zwar bevorzugt im längsmittleren Bereich des Fahrzeuges, und die Stegteile 2, 3, von denen hier nur die Anschlussbereiche an den Drehsteller gezeigt sind, gehen an ihren hier nicht dargestellten, gegen die Längsseiten des Fahrzeuges verlaufenden Enden in Stabilisatorarme über oder sind an diesen befestigt, die sich in grober Annäherung in Fahrzeuglängsrichtung erstrecken und Teile der jeweiligen Radführung der einander gegenüberliegenden Räder einer Achse, die durch den Fahrstabilisator verbunden sind, beaufschlagen. Die Stegteile 2, 3 sind im Ausführungsbeispiel einstückig mit Flanschen verbunden, die gleichzeitig Deckel bilden, welche nachfolgend als Flanschdeckel 4, 5 bezeichnet sind und als seitlicher, stirnseitiger Abschluss des Drehstellers 1 vorgesehen sind.

Die Funktionsteile des Drehstellers 1 sind dessen zwischen den Flanschdeckeln 4, 5 liegendem Mittelteil 6 zugeordnet, das einen Außenkörper 7 und einen Innenkörper 8 umfasst, wobei der Außenkörper 7 als Ringmantel die axiale Anlage für die Flanschdeckel 4 und 5 bildet. Im Gegensatz zum Außenkörper 7, der bevorzugt einstückig ausgebildet ist, ist der Innenkörper 8 im Ausführungsbeispiel gebaut und besteht im Wesentlichen aus einem Mittelstück 9, das endseitig mit Ringbunden 10 und 11 versehen ist, die im Durchmesser größer sind als das Mittelstück 9 und die den zwischen den Außenkörper 7 und dem Mittelstück 9 liegenden, insgesamt mit 12 bezeichneten Ringraum axial abschließen.

Von den Ringbunden 10 und 11 ist der Ringbund 10 im Außendurchmesser kleiner als der Ringbund 11 und Bestandteil einer Scheibe 13, die gegenüber dem Mittelstück 9 über einen axial in dieses hineinragenden Führungshals 14 geführt ist, wobei die Scheibe 13 im Bereich des zentrischen Führungshalses 14 von einer zentrischen Gewindebohrung durchsetzt ist und über eine zentrale Spannschraube 15 mit dem Mittelstück 9 verspannt ist. Zusätzlich zu dieser Verspannung, die eine reibschlüssige Verbindung bedingt, ist das Mittelstück 9 mit der Scheibe 13 im Bereich des Führungshalses 14 bevorzugt über Stiftverbindungen 16 formschlüssig verbunden, so dass eine verdrehsichere, praktisch starre Verbindung zwischen dem Mittelstück 9 und der Scheibe 13 mit dem Ringbund 10 gegeben ist. Am gegenüberliegenden Ende geht das Mittelstück 9 erfindungsgemäß bevorzugt einstückig in den Ringbund 11 über, dessen radialer Durchmesser größer ist als der des Ringbundes 10. Beide Ringbunde 10 und 11, über die die axiale und radiale Führung des Innenkörpers 8 im Außenkörper 7 koaxial zu diesem erfolgt - wobei die Drehachse des Drehstellers 1 und der mit diesem verbundenen Stegteile 1, 3 mit 17 bezeichnet ist - stützen sich auf Schultern 18, 19 des Außenkörpers 7 ab, wobei die Schultern 18, 19 stirnseitig am Innenumfang des Außenkörpers 7 vorgesehen sind und radiale Lagerflächen 20, 21 sowie axiale Abstützflächen 22, 23 für die Ringbunde 10, 11 bilden. Durch die axiale Verspannung über die Spannschraube 15 ist der Innenkörper 8 insgesamt gegenüber dem Außenkörper 7 festgelegt, wobei der Innenkörper 8 über den Außenkörper 7 stirnseitig nicht hinausragt und der Außenkörper 7 quasi das Mittelteil 6 des Gehäuses des Drehstellers 1 bildet.

Von den Flanschdeckeln 4 und 5 ist der Flanschdeckel 4, der der Stirnseite des Drehstellers 1 zugeordnet ist, an der der Ringbund 10 kleineren Durchmessers liegt, mit dem Mittelteil 6 des Gehäuses verschraubt, wobei die Verschraubung gegen einen radialen Flanschbund 24 des Mittelteiles 6 erfolgt, der sich radial nach außen erstreckt und in dem radial innen die Schulter 18 angeordnet ist. Die Verschraubung erfolgt im Ausführungsbeispiel über vier Spannschrauben 25, wobei über die Schrauben 25 eine Reibschlussverbindung zwischen dem Flanschdeckel 4 und dem Mittelteil 6 hergestellt wird.

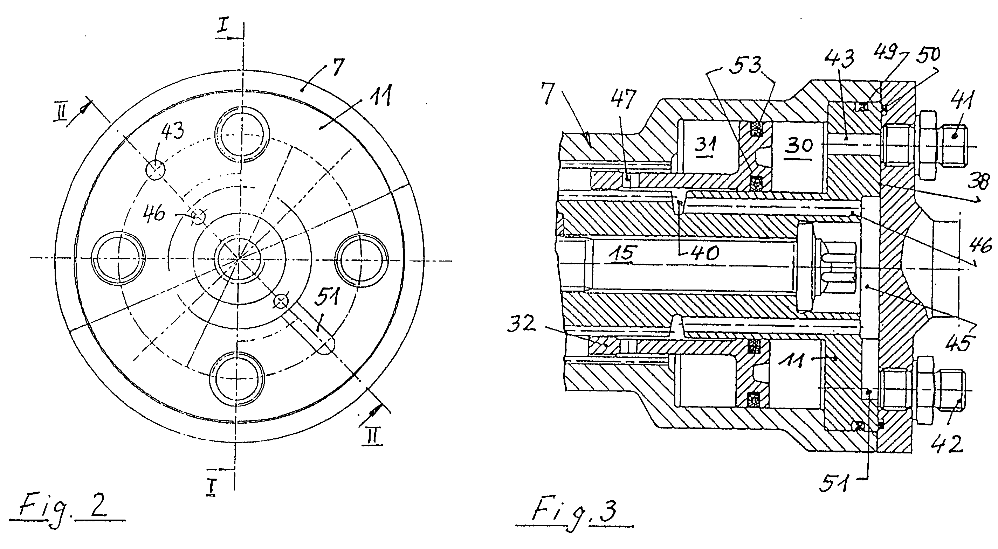

An der anderen Stirnseite des Drehstellers 1, der der Ringbund 11 größeren Durchmessers zugeordnet ist, bildet dieser Ringbund 11 die Anlagefläche für den Flanschdeckel 5, wobei hier eine Reibschlussverbindung zwischen dem Flanschdeckel 5 und der benachbarten Stirnfläche des Ringbundes 11 über Spannschrauben hergestellt wird. Die Gewindebohrungen für die Spannschrauben 26 im Ringbund 11 sind in Fig. 2 mit 27 bezeichnet.

Der Ringraum 12 zwischen Außenkörper 7 und Innenkörper 8 weist über seine axiale Länge unterschiedliche Breite auf, wobei benachbart zum Ringbund 11 größeren Durchmessers der Ringraumteil 28 größerer Breite vorgesehen ist, in dem ein Ringkolben 29 mit Dichtungen 3 axial verschiebbar angeordnet ist, der den Ringraumteil 28 in zwei Arbeitskammern 30 und 31 unterteilt. Der Ringkolben 29 weist radial innen an seiner einen, dem Ringbund 10 kleineren Durchmessers zugewandten Seite als halsartigen Fortsatz eine Buchse 32 auf, die in einen Ringraumteil 33 hineinragt, der in seiner Breite kleiner ist als der Ringraumteil 28 und in axialer Verlängerung zu diesem liegt. Der Außendurchmesser des Innenkörpers 8 im Bereich seines Mittelstückes 9 entspricht über die Länge des Mittelstückes 9 dem Innendurchmesser des Kolbens 29 und der Buchse 32, und der Außenkörper 7 ist in seinem dem Ringraumteil 33 kleinerer Breite entsprechenden Bereich radial nach innen eingezogen.

Die Buchse 32 ist im vom Ringkolben 29 abgelegenen Endbereich, was nicht im Detail dargestellt ist, in an sich bekannter Weise radial innen und radial außen jeweils mit einer Schrägverzahnung versehen, wobei diese Verzahnungen entgegengerichtet gepfeilt sind und jeweils mit einer Gegenverzahnung im Eingriff stehen, die dem Außenkörper 7 bzw. dem Innenkörper 8 zugeordnet ist. Die entsprechenden Verzahnungen sind in Fig. 1 für den Außenkörper 7 mit 34, für den Außenumfang der Buchse 32 mit 35, für den Innenumfang der Buchse mit 36 und für den Außenumfang des Innenkörpers 8 mit 37 bezeichnet.

Die Verzahnung 37 ist gegenüber der am Innenkörper 8 vorgesehenen Führungsfläche 39 für den Kolben 29 axial durch eine im Außenumfang des Innenkörpers 8 vorgesehene Rinne 40 abgesetzt, die axial etwa auf Höhe der vom Ringbund 11 größeren Durchmessers abgewandten Stirnseite des Ringraumteiles 28 liegt.

Die insbesondere hydraulische Druckbeaufschlagung des Ringkolbens 29 durch Zuführung von Druckmedium auf die Arbeitskammern 30 und 31 erfolgt, wie insbesondere Fig. 3 in Verbindung mit Fig. 2 veranschaulicht, über axiale Anschlüsse 41, 42, die der Stirnseite des dem Ringbund 11 größeren Durchmessers benachbarten Flanschdeckels 5 zugeordnet sind. Von diesen wird über den Anschluss 41 und die Bohrung 43 im Ringbund 11 die diesem unmittelbar benachbarte Arbeitskammer 30 versorgt, während die Arbeitskammer 31 mit dem Anschluss 42 verbunden ist. Diese Verbindung verläuft im Wesentlichen innerhalb des Innenkörpers 8, wobei zentral um den Kopfraum 44 der Spannschraube 15 ein durch den Flanschdeckel 5 abgeschlossener, im Ringbund 11 vorgesehener Verteilerraum 45 vorgesehen ist, von dem axiale Verteilerbohrungen 46 ausgehen und auf die Rinne 40 ausmünden, die mit radialem Abstand vom Innenumfang der Buchse 32 überdeckt ist. In der Buchse 32 ist ferner in dem vor den Verzahnungen 35 und 36 liegenden Übergangsbereich wenigstens eine Radialbohrung 47 vorgesehen, über die die Druckflüssigkeit auf den gegenüber der Verzahnung 34 des Außenkörpers 7 radial nach innen abgesetzten Bereich der Buchse 32 austritt, und damit in den Ringraumteil 28 übertritt.

Bei der erfindungsgemäßen Lösung liegen somit die Versorgungswege innerhalb des Mittelteiles 6, so dass sich keine Leckagen ergeben können und lediglich eine Mindestzahl von Dichtungen erforderlich ist, wobei im Rahmen der Erfindung der Flanschdekkel 4 gegenüber dem Außenkörper 7 unmittelbar bevorzugt über eine Ringdichtung 48 abgedichtet ist.

Gegenüberliegend erfolgt die Abdichtung zwischen dem Ringbund 11 und dem Außenkörper 7 über die beim erfindungsgemäßen System einzige Dichtung 49 zwischen bewegten Teilen.

Ferner ist eine Ringdichtung 50 zwischen dem Flanschdeckel 5 und dem fest mit diesem verbundenen Ringbund 11 vorgesehen, so dass Einzeldichtungen im Bereich der Anschlüsse 41 und 42 vermieden werden können, wenn, wie dargestellt, der Anschluss 41 im Übergang auf die Bohrung 43 durch eine annähernd dichte Anlage zwischen dem Flanschdeckel 5 und der Stirnfläche 38 des Ringbundes 11 gegen den Verteilerraum 45 angeschlossen ist.

Insbesondere Fig. 2 und 3 zeigen, dass der Anschluss 42 mit dem Verteilerraum 45 über einen Stichkanal 51 verbunden ist, der in die dem Flanschdeckel 5 zugeordnete Stirnfläche 38 des Ringbundes 11 eingearbeitet ist.

Durch die Erfindung wird aufbauend auf dem zum Beispiel durch die EP 0 428 439 A1 bekannten Verstellprinzip ein Drehversteller geschaffen, der sich durch sehr kompakte Bauweise und sehr günstige Montagevoraussetzungen auszeichnet, wobei durch die Ausbildung der Antriebsanschlüsse zu den Stegteilen 2 und 3 als Flanschdeckel 4, 5 zudem eine weitere Vereinfachung und eine besonders kompakte und kurze Bauweise erreicht wird. Des Weiteren zeichnet sich die erfindungsgemäße Lösung dadurch aus, dass nur interne Ölkanäle vorgesehen sind, somit unter Dichtungsgesichtspunkten ebenfalls eine sehr günstige Konstruktion gegeben ist. Diese ermöglicht zudem axiale Anschlüsse, wie sie im Hinblick auf die Raumverhältnisse an Fahrzeugen besonders vorteilhaft sind.

Die zugeordneten Steuereinrichtungen zur Beaufschlagung der Arbeitsräume mit Druckflüssigkeit sind nicht weiter dargestellt, können aber in üblicher Weise durch Wegeventile gebildet sein. Bei einer bevorzugten Lösung ist jeweils ein 3/2 Wegeventil, insbesondere ein Proportional-Ventil vorgesehen, so dass eine Einsteuerung beliebiger Lagen, so insbesondere auch eine Mittellage möglich ist. In der Mittellage können die Anschlüsse gesperrt sein, so dass der Drehsteller als starres Verbindungsstück zwischen den an ihn angeschlossenen Stegteilen wirkt.

Ferner kann aber auch die Mittellage als Schwimmstellung eingesteuert werden, so dass die Stegteile frei gegeneinander beweglich sind. Es lassen sich somit, entsprechend vorgegebenen Fahrprogrammen oder auch frei wählbar, die über einen Fahrstabilisator beeinflussbaren Fahrwerkseffekte nach Vorgaben oder frei wählbar nutzen.

In Verbindung hiermit kann es im Rahmen der Erfindung weiterhin zweckmäßig sein, die Verzahnungen so auszubilden, dass sich ein Selbsthemmeffekt ergibt, also eine Verdrehung der Stegteile gegeneinander nur über aktive Beaufschlagung des Stellkolbens möglich ist.

Durch die Zusammenfassung der Funktionsteile des Drehstellers in einem Mittelteil 6, das zwischen die Flanschdeckel 4, 5 radial einschiebbar ist, ergeben sich auch sehr günstige Voraussetzungen für etwaige Wartungs- und Reparaturarbeiten, da der die Funktionsteile beinhaltende Mittelteil 6 als Montageeinheit zwischen die Flanschdeckel 4, 5 einzuschieben ist.

## Patentansprüche

1. Hydraulisch betätigbarer Drehsteller (1) mit einem Innenkörper (8) und einem koaxialen Außenkörper (7), die gegeneinander verdrehbar sind, von denen der Außenkörper (7) als Ringmantel zum Innenkörper (8) diesen axial überdeckt und von denen der Innenkörper (8) endseitige Ringbunde (10, 11) aufweist und über diese Ringbunde (10, 11) gegen radial abgesetzte Schultern (18, 19) des Außenkörpers (7) axial und radial abgestützt ist, und mit zwei gegeneinander über den Drehsteller (1) verdrehbaren Elementen zugeordneten, stirnseitig zum Innenkörper (8) und zum Außenkörper (7) vorgesehenen Antriebsanschlüssen, von denen der eine Antriebsanschluss dem Außenkörper (7) und der andere, gegenüberliegende Antriebsanschluss dem einen Ringbund (11) des Innenkörpers (8) zugeordnet ist, wobei der eine Ringbund (11), dem der eine Antriebsanschluss zugeordnet ist, im Übergang zum Außenkörper (7) eine Dichtung (49) aufweist und wobei der Innenkörper (8) und der Außenkörper (7) einen Ringraum (12) begrenzen, in dem eine Hülse angeordnet ist, die einen Ringkolben (29) und axial daran anschließend eine Buchse (32) umfasst, von denen sich der Ringkolben (29) auf zylindrischen Flächen des Innenkörpers (8) und des Außenkörpers (7) bewegt und zwei druckbeaufschlagte Arbeitskammern (30, 31) voneinander trennt und von denen die Buchse (32) radial innen und radial außen jeweils mit einer Schrägverzahnung (35, 36) versehen ist, die bei voneinander abweichender Pfeilung mit einer entsprechenden Verzahnung (37, 34) des Innenkörpers (8) und des Außenkörpers (7) in Eingriff steht,
**dadurch gekennzeichnet,**
**dass** die Antriebsanschlüsse durch an den den Innenkörper (8) über seine volle Länge überdeckenden Außenkörper (7) anschließende, den stirnseitigen Abschluss des Drehstellers (11) bildende Flanschdeckel (4, 5) gebildet sind, von denen der mit dem Außenkörper (7) antriebsverbundene Flanschdeckel (4) gasdicht am Außenkörper (7) und der mit dem einen Ringbund (11) des Innenkörpers (8) antriebsverbundene Flanschdeckel (5) gasdicht an diesem Ringbund (11) befestigt ist.

2. Drehsteller nach Anspruch 1,
**dadurch gekennzeichnet,**
**dass** zwischen den stirnseitigen Ringbunden (10, 11) des Innenkörpers (8) ein Mittelstück (9) des Innenkörpers (8) liegt, das einen über seine Länge zumindest im Wesentlichen gleichen, gegenüber den Ringbunden (10, 11) abgesetzten Durchmesser aufweist und dass der zwischen dem Außenkörper (7) und dem Innenkörper (8) liegende Ringraum (12) zwei axial aufeinander folgende Abschnitte als Ringraumteile (28, 33) unterschiedlicher Ringbreite aufweist.

3. Drehsteller nach Anspruch 2,
**dadurch gekennzeichnet,**
**dass** der durch den Ringraumteil (28) größerer Breite gebildete Abschnitt des Ringraumes (12) den als Ringkolben (29) ausgebildeten Kolben aufnimmt.

4. Drehsteller nach Anspruch 2 oder 3,
**dadurch gekennzeichnet,**
**dass** der Ringkolben (29) den Ringraumteil (28) größerer Breite in zwei Arbeitskammern (30, 31) unterteilt und mit der an ihm befestigten Buchse (32) in den Ringraumteil (33) kleinerer Breite hineinragt.

5. Drehsteller nach einem der Ansprüche 2 bis 4,
**dadurch gekennzeichnet,**
**dass** von den Ringbunden (10, 11) der eine Ringbund (11) einstückig mit dem zwischen den Ringbunden (10, 11) liegenden Mittelstück (9) des Innenkörpers (8) ausgebildet ist.

6. Drehsteller nach einem der Ansprüche 2 bis 5,
**dadurch gekennzeichnet,**
**dass** von den Ringbunden (10, 11) der andere Ringbund (10) am Mittelstück (9) angesetzt ist.

7. Drehsteller nach Anspruch 6,
**dadurch gekennzeichnet,**
**dass** der andere am Mittelstück (9) angesetzte Ringbund (10) einen zentralen und axial in das Mittelstück (9) des Innenkörpers (8) eingreifenden Führungshals (14) aufweist.

8. Drehsteller nach Anspruch 6 oder 7,
**dadurch gekennzeichnet,**
**dass** der andere am Mittelstück (9) angesetzte Ringbund (10) über eine zentrale Spannschraube (15) gegen das Mittelstück (9) verspannt ist.

9. Drehsteller nach Anspruch 8,
**dadurch gekennzeichnet,**
**dass** der andere am Mittelstück (9) angesetzte Ringbund (10) formschlüssig drehfest mit dem Mittelstück (9) verbunden ist.

10. Drehsteller nach einem der Ansprüche 2 bis 9,
**dadurch gekennzeichnet,**
**dass** die Ringbunde (10, 11) unterschiedliche Außendurchmesser aufweisen.

11. Drehsteller nach Anspruch 10,
**dadurch gekennzeichnet,**
**dass** der eine den größeren Durchmesser aufweisende und zum Mittelstück (9) einstückige Ringbund (11) eine der Stirnwände der über den Ringkolben (29) getrennten Arbeitsräume (30, 31) bildet.

12. Drehsteller nach Anspruch 11,
**dadurch gekennzeichnet,**
**dass** dem, dem einen Ringbund (11) mit dem größeren Durchmesser benachbarten Arbeitsraum (30) eine auf diesen ausmündende und diesen Ringbund (11) durchsetzende axiale Versorgungsbohrung (43) zugeordnet ist.

13. Drehsteller nach Anspruch 11 oder 12,
**dadurch gekennzeichnet,**
**dass** zur Versorgung des von dem einen Ringbund (11) größeren Durchmessers abgelegenen Arbeitsraumes (31) eine im Mittelstück (9) verlaufende Axialbohrung (46) vorgesehen ist, die von einem zentralen, in der Stirnseite des im Durchmesser größeren Ringbundes (11) vorgesehenen Verteilerraum (45) ausgeht.

14. Drehsteller nach Anspruch 13,
**dadurch gekennzeichnet,**
**dass** die Axialbohrung (46) über eine die Buchse (32) durchsetzende Radialbohrung (47) an die zugehörige Arbeitskammer (31) angeschlossen ist.

15. Drehsteller nach einem der vorhergehenden Ansprüche,
**dadurch gekennzeichnet,**
**dass** die Versorgungsanschlüsse (41, 42) für die Arbeitskammern (30, 31) an einer Stirnseite des Drehstellers (1) vorgesehen sind.

16. Drehsteller nach einem der vorhergehenden Ansprüche,
**dadurch gekennzeichnet,**
**dass** der mit dem Innenkörper (8) antriebsverbundene Flanschdekkel (5) gegen den einen, den größeren Durchmesser aufweisenden Ringbund (11) verschraubt ist.

17. Drehsteller nach Anspruch 16,
**dadurch gekennzeichnet,**
**dass** der zum Ringbund (11) größeren Durchmessers benachbarte Flanschdeckel (5) mit den axialen Versorgungsanschlüssen (41, 42) versehen ist.

18. Drehsteller nach einem der vorhergehenden Ansprüche,
**dadurch gekennzeichnet,**
**dass** die Flanschdeckel (4, 5) gleiche Durchmesser aufweisen.

19. Drehsteller nach einem der vorhergehenden Ansprüche,
**dadurch gekennzeichnet,**
**dass** der Außenkörper (7) stirnseitig im Anschlussbereich der Flanschdeckel (4, 5) gleiche Durchmesser aufweist.

20. Drehsteller nach einem der vorhergehenden Ansprüche,
**dadurch gekennzeichnet,**
**dass** die über den Drehsteller (1) verbundenen Elemente durch Stegteile (2, 3) eines Fahrstabilisators gebildet sind.

21. Drehsteller nach Anspruch 20,
**dadurch gekennzeichnet,**
**dass** die Stegteile (2, 3) des Fahrstabilisators einstückig mit den Flanschdeckeln (4, 5) ausgebildet sind.

## Claims

1. Hydraulically activated rotary adjuster (1) with an inner body (8) and a coaxial outer body (7) which can be adjusted against each other, of which the outer body as an annular sleeve to the inner body (8) covers the same axially end of which the inner body has (8) end annular collars (10, 11) and by means of these annular collars (10, 11) is axially and radially supported against radially offset shoulders (18, 19) of the outer body (7), and drive connections (1) provided on the front side to the inner body (8) and to the outer body (7) assigned to two elements which can be adjusted against each other by means of the rotary adjuster (1), of which one drive connection is assigned to the outer body (7) and the other, opposing drive connection is assigned to one ring collar (11) of the inner body (8) wherein one ring collar (11), to which one drive connection is assigned, has a gasket (49) in the transition to the outer body (8) and wherein the inner body (8) and the outer body (7) limit an annular space (12), in which a sleeve is arranged which has an annular piston (29) and a bushing (32) connecting axially thereto, of which the annular piston (29) moves on cylindrical areas of the inner body (8) and the outer body (7) and separates two pressure-impacted work chambers (30, 31) from each other and of which the bushing (32) is provided with inclined toothing (35, 36) radially inwards and radially outwards which with arrows deviating away from each other engages with corresponding toothing (37, 34) of the inner body (8) and the outer body (7),
**characterised in that**
the drive connections are formed by flange covers (4, 5) forming the front end of the rotary adjuster (11) connecting to the outer body (7) covering the inner body over its full length, of which the flange cover (4) in drive connection with the outer body (8) is fixed in a gastight way to the outer body (7) and the flange cover (5) in drive connection with one annular collar (11) of the inner body (8) is fixed in a gastight way to this annular collar (11).

2. Rotary adjuster according to claim 1,
**characterised in that**
between the front annular collars (10, 11) of the inner body (8) a middle piece (9) of the inner body (8) lies which has a diameter offset in relation to the annular collars (10, 11) at least essentially equal over its length and that the annular space (12) lying between the outer body (7) and the inner body (8) has two sections following axially upon one another as annular space components (28, 33) of differing annular breadth.

3. Rotary adjuster according to claim 2,
**characterised in that**
the section of the annular space (12) formed by the annular space component (28) of larger breadth takes up the piston formed as an annular piston (29).

4. Rotary adjuster according to claim 2 or 3,
**characterised in that**
the annular piston (29) divides the annular space component (28) of larger breadth into two work chambers (30, 31) and engages with the bushing (32) fixed to it in the annular space component (33) of smaller breadth.

5. Rotary adjuster according to one of the claims 2 to 4,
**characterised in that**
of the annular collars (10, 11) one annular collar (11) is formed as one component with the middle piece (9) of the inner body (8) lying between the annular collars (10, 11).

6. Rotary adjuster according to one of the claims 2 to 5,
**characterised in that**
of the annular collars (10, 11) the other annular collar is arranged on the middle piece (9).

7. Rotary adjuster according to claim 6,
**characterised in that**
the other annular collar (10) arranged on the middle piece (9) has a central guide neck (14) engaging axially in the middle piece (9) of the inner body (8).

8. Rotary adjuster according to claim 6 or 7,
**characterised in that**
the other annular collar (10) arranged on the middle piece (9) is tensioned against the middle piece (9) by means of a central clamping screw (15).

9. Rotary adjuster according to claim 8,
**characterised in that**
the other annular collar (10) arranged on the middle piece (9) is connected in a shape-locking rotationally secure way to the middle piece (9).

10. Rotary adjuster according to one of the claims 2 to 9,
**characterised in that**
the annular collars (10, 11) have different outer diameters.

11. Rotary adjuster according to claim 10,
**characterised in that**
the annular collar (11) with the larger diameter and forming one component with the middle piece (9) forms one of the front walls of the work spaces (30, 31) separated by the annular piston (29).

12. Rotary adjuster according to claim 11,
**characterised in that**
the work space (30) adjacent to the annular collar (11) with the larger diameter has an axial supply hole (43) pushed through this annular collar (11) and opening onto tne work space (30) assigned to it.

13. Rotary adjuster according to claim 11 or 12,
**characterised in that**
for the supply of the work space (31) lying off the annular collar (11) with the larger diameter an axial hole (46) running in the middle piece (9) is provided which projects from a central distribution area (45) provided in the front side of the annular collar (11) with the larger diameter.

14. Rotary adjuster according to claim 13,
**characterised in that**
the axial hole is connected to the associated work chamber (31) by means of a radial hole (47) pushed through the bushing (32).

15. Rotary adjuster according to one of the preceding claims,
**characterised in that**
the supply connections (41, 42) for the work chambers (30, 31) are provide on a front side of the rotary adjuster (1).

16. Rotary adjuster according to one of the preceding claims,
**characterised in that** the flange cover (5) in drive connection with the inner body (8) is screwed against the annular collar (11) with a larger diameter.

17. Rotary adjuster according to claim 16,
**characterised in that**
the flange cover (5) adjacent to the annular collar (11) with the larger diameter is provided with the axial supply connections (41, 42).

18. rotary adjuster according to one of the preceding claims,
**characterised in that**
the flange covers (4, 5) have equal diameter.

19. Rotary adjuster according to one of the preceding claims,
**characterised in that**
the outer body (7) on the front side in the connection region of the flange covers (4, 5) has equal diameter.

20. Rotary adjuster according to one of the preceding claims,
**characterised in that**
the elements connected by means of the rotary adjuster (1) are formed by web components (2, 3) of a driving stabiliser.

21. Rotary adjuster according to claim 20,
**characterised in that**
the web components (2, 3) of the driving stabiliser are formed as one component with the flange covers (4, 5).

## Revendications

1. Actuateur rotatif (1) à commande hydraulique avec un corps interne (8) et un corps externe (7) coaxial lesquels peuvent être tordus de manière antagoniste, le corps externe (7) recouvrant axialement le corps interne (8) en guise d'enveloppe annulaire par rapport à celui-ci, et le corps interne (8) présentant des attaches annulaires (10, 11) du côté de l'extrémité et étant supporté axialement et radialement via ces attaches annulaires (10, 11) contre des épaulements (18, 19) radialement étagés du corps extérieur (7), et avec deux raccords d'entraînement pouvant être tordus de manière antagoniste via l'actuateur rotatif (1), associés à des éléments, et prévus du côté frontal par rapport au corps interne (8) et au corps externe (7), l'un des raccords d'entraînement étant associé au corps externe (7) et l'autre raccord d'entraînement opposé étant associé à l'une des attaches annulaires (11) du corps interne (8), sachant que l'une des attaches annulaires (11) à laquelle l'un des raccords d'entraînement est associé, présente un calfeutrage (49) au niveau de la transition vers le corps externe (7), et sachant que le corps interne (8) et le corps externe (7) délimitent un espace annulaire (12) dans lequel est disposé un manchon entourant un piston annulaire (29) et une douille (32) en prolongement axial du piston, le piston annulaire (29) se déplaçant sur des surfaces cylindriques du corps interne (8) et du corps externe (7) et séparant l'un de l'autre deux compartiments de travail (30, 31) pressurisés, et la douille (32) étant pourvue d'une denture hélicoïdale (35, 36) respectivement radialement à l'intérieur et radialement à l'extérieur, lesquelles dentures, avec des positions en flèche qui divergent l'une de l'autre, sont en prise avec une denture correspondante (37, 34) du corps interne (8) et du corps externe (7), **caractérisé en ce que** les raccords d'entraînement sont formés par des couvercles à bride (4, 5) en prolongement du corps externe (7) qui recouvre sur toute sa longueur le corps interne (8), lesquels couvercles forment la terminaison du côté frontal de l'actuateur rotatif (11), celui des couvercles à bride (4) qui est en liaison d'entraînement avec le corps externe (7) étant fixé de manière étanche au gaz sur le corps externe (7), et celui des couvercles à bride (5) qui est en liaison d'entraînement avec l'une des attaches annulaires (11) du corps interne (8) étant fixé de manière étanche au gaz sur cette attache annulaire (11).

2. Actuateur rotatif selon la revendication 1, **caractérisé en ce qu'**entre les attaches annulaires (10, 11) du côté frontal du corps interne (8) se situe une pièce du milieu (9) du corps interne (8), laquelle présente un diamètre identique au moins pour l'essentiel sur toute sa longueur et étagé par rapport aux attaches annulaires (10, 11), et **en ce que** l'espace annulaire (12) se situant entre le corps externe (7) et le corps interne (8) présente deux subdivisions qui se suivent axialement en guise de parties d'espace annulaire (28, 33) avec différentes largeurs annulaires.

3. Actuateur rotatif selon la revendication 2, **caractérisé en ce que** la subdivision de l'espace annulaire (12) formée par la partie d'espace annulaire (28) de largeur plus importante, réceptionne le piston conçu en tant que piston annulaire (29).

4. Actuateur rotatif selon l'une quelconque des revendications 2 ou 3, **caractérisé en ce que** le piston annulaire (29) divise la partie d'espace annulaire (28) de largeur plus importante en deux compartiments de travail (30, 31) et s'érige à l'intérieur de la partie d'espace annulaire (33) de largeur moins importante avec la douille (32) qui est fixée sur lui.

5. Actuateur rotatif selon l'une quelconque des revendications 2 à 4, **caractérisé en ce que** l'une des attaches annulaires (11) des attaches annulaires (10, 11) est réalisée en une seule pièce avec la pièce du milieu (9) du corps interne (8) située entre les attaches annulaires (10, 11).

6. Actuateur rotatif selon l'une quelconque des revendications 2 à 5, **caractérisé en ce que** l'autre attache annulaire (10) des attaches annulaires (10, 11) est rajoutée sur la pièce du milieu (9).

7. Actuateur selon la revendication 6, **caractérisé en ce que** l'autre attache annulaire (10) rajoutée sur la pièce du milieu (9) présente une gorge de guidage (14) centrale en prise axiale dans la pièce du milieu (9) du corps interne (8).

8. Actuateur rotatif selon l'une quelconque des revendications 6 ou 7, **caractérise en ce que** l'autre attache annulaire (10) rajoutée sur la pièce du milieu (9) est déformée contre la pièce du milieu (9) via une vis de serrage centrale (15).

9. Actuateur selon la revendication 8, **caractérisé en ce que** l'autre attache annulaire (10) qui est rajoutée sur la pièce du milieu (9) est reliée de manière mécanique à la pièce du milieu (9) en solidarité de rotation.

10. Actuateur rotatif selon l'une quelconque des revendications 2 à 9, **caractérisé en ce que** les attaches annulaires (10, 11) présentent des diamètres extérieurs différents.

11. Actuateur rotatif selon la revendication 10, **caractérisé en ce que** l'une des attaches annulaires (11) présentant le diamètre plus important et formant une seule pièce avec la pièce du milieu (9), forme l'une des cloisons frontales des compartiments de travail (30, 31) séparés via le piston annulaire (29).

12. Actuateur rotatif selon la revendication 11, **caractérisé en ce qu'**à l'un des compartiments de travail (30) qui jouxte l'une des attaches annulaires (11) avec le diamètre plus important, une forure d'alimentation (43) est associée qui débouche sur le compartiment de travail et traverse axialement cette attache annulaire (11).

13. Actuateur rotatif selon l'une quelconque des revendications 11 ou 12, **caractérisé en ce que** pour l'alimentation du compartiment de travail (31) éloigné de l'une des attaches annulaires (11) d'un diamètre plus important, une forure axiale (46) s'étendant dans la pièce du milieu (9) est prévue, laquelle débute dans un espace de distribution (45) central prévu dans le côté frontal de l'attache annulaire (11) avec un diamètre plus important.

14. Actuateur rotatif selon la revendication 13, **caractérisé en ce que** la forure axiale (46) est raccordée au compartiment de travail (31) associé via une forure radiale (47; traversant la douille (32).

15. Actuateur rotatif selon l'une quelconque des revendications précédentes, **caractérisé en ce que** les raccords d'alimentation (41, 42) pour les compartiments de travail (30, 31) sont prévus sur un côté frontal de l'actuateur rotatif (1).

16. Actuateur rotatif selon l'une quelconque des revendications précédentes, **caractérisé en ce que** le couvercle à bride (5) en liaison d'entraînement avec le corps interne (8) est vissé contre celle des attaches annulaires (11) qui présente le diamètre plus important.

17. Actuateur selon la revendication 16, **caractérisé en ce que** le couvercle à bride (5) qui jouxte l'attache annalaire (11) avec le diamètre plus important, est muni des raccords d'alimentation (41, 42) axiaux.

18. Actuateur rotatif selon l'une quelconque des revendications précédentes, **caractérisé en ce que** les couvercles à bride (4, 5) présentent des diamètres identiques.

19. Actuateur rotatif selon l'une quelconque des revendications précédentes, **caractérisé en ce que** le corps externe (7) présente des diamètres identiques du côté frontal dans la zone de raccordement des couvercles à bride (4,5).

20. Actuateur rotatif selon l'une quelconque des revendications précédentes, **caractérisé en ce que** les éléments reliés via l'actuateur rotatif (1) sont formés par des éléments de nervure (2, 3) d'un stabilisateur de conduite.

21. Actuateur rotatif selon la revendication 20, **caractérisé en ce que** les éléments de nervure (2, 3) du stabilisateur de conduite sont conçus en une seule pièce avec les couvercles à brides (4, 5).
